# EUROPEAN PATENT SPECIFICATION

(11) **EP 3 087 248 B1**
(45) Date of publication and mention of the grant of the patent: **03.10.2018**
(21) Application number: 14875390.8
(22) Date of filing: 19.12.2014
(51) Int. Cl.: E21B 44/00, G06G 7/48, G06F 9/455, E21B 41/00

(54) **DATA VISUALIZATION IN BOREHOLE SYSTEMS**
VISUALISIERUNG VON DATEN BEI BOHRLOCHSYSTEMEN
VISUALISATION DE DONNÉES DANS DES SYSTÈMES DE TROU DE FORAGE

(30) Priority: 26.12.2013 US 201314140900
(43) Date of publication of application: 02.11.2016
(73) Proprietor: Baker Hughes, a GE company, LLC, Houston, TX 77210-4740 (US)
(72) Inventor: HERBIG, Christian, Houston, TX 77019-2118 (US); MEYER-HEYE, Bernhard, Houston, TX 77019-2118 (US); RECKMANN, Hanno, Houston, TX 77019-2118 (US); OUESLATI, Hatem, Houston, TX 77019-2118 (US); HOHL, Andreas, Houston, TX 77019-2118 (US); EMMERICH, Wojciech, Houston, TX 77019-2118 (US)
(74) Representative: BRP Renaud & Partner mbB Rechtsanwälte Patentanwälte Steuerberater
(86) International application number: PCT/US2014/071498
(87) International publication number: WO 2015/100165

(56) References cited:
- WO-A2-2009/018242
- WO-A2-2009/058635
- US-A1- 2004 008 578
- US-A1- 2004 010 374
- US-A1- 2005 189 483
- US-A1- 2009 229 819
- US-A1- 2012 029 828
- US-A1- 2012 118 637
- US-A1- 2012 118 637
- US-A1- 2013 049 981
- US-A1- 2013 083 031

## Description

### BACKGROUND

During drilling operations, wellbore completion operations, or any other operations related to predicting, forming, or analyzing a borehole, wellbore, or downhole assembly, data regarding the borehole, downhole assembly, and surrounding formation are calculated or measured to assist in predicting and analyzing the borehole system. Typical methods for analyzing the calculated or measured data provide analyses in two dimensions, such as a measurement versus borehole depth. Alternatively, a display may be provided of borehole data in three dimensions, such as a measurement versus depth versus time.

From US 2012/0118637 a method and a system for controlling drilling operations is known. The method includes using a statistical model to find significant correlation between two or more controllable drilling parameters in the pursuit of an optimized drilling operation.

From US 2004/0008578 a method of proceeding seismic data is known. The method comprises the step of using a vertical seismic data profile to determine a model of the relationship between depth within the earth and the velocity of seismic energy.

From US 2005/0189483 an apparatus and a method of logging of an earth formation are known, wherein the earth formation is irradiated using a radiation source on a logging tool in a borehole in the earth formation. Measurements are partitioned over a selected time interval into a plurality of azimuthal sectors. A property of the earth formation using the measurements within the identified azimuthal sector is determined.

WO 2009/058635 describes a method for assisting the drilling of a borehole at a drilling site. The method comprises collecting sensed physical measurement data related to the drilling and using a knowledge base which consists of attributes and measurements of prior and current wells. The collected data and information are used to create the rules for drilling a notational "best well".

US 2004/0010374 refers to a method of processing large volumes of data to allow for real-time reservoir management. The method comprises a) acquiring a first data series from a first reservoir sensor; b) establishing a set of criteria based on at least one of the group consisting of reservoir management objectives, sensor characteristics, sensor location, nature of the reservoir, and data storage optimization; and c) identifying one or more subsets of said first data series meeting at least one of said criteria.

US 2012/0029828 relates to a method for performing chrono-stratigraphic interpretation of subterranean formation. The method includes obtaining a seismic volume comprising a plurality of stratigraphic features of the subterranean formation. With "seismic volume" seismic data, as collected via a receiver, within a volume of interest in the subterranean formation is meant.

### SUMMARY

Embodiments of the invention relate to a method of visualizing borehole system data including obtaining first borehole system data, second borehole system data, third borehole system data, and fourth borehole system data corresponding to first, second, third, and fourth borehole system characteristics, respectively, of a first borehole system, wherein the first borehole system data represents a weight-on-bit of a drill bit of a downhole assembly, wherein the second borehole system data represents a rotation rate, wherein the third borehole system data represents a measurement of characteristics of an earth formation, and wherein the fourth borehole system data represents an effectiveness of operation of the downhole assembly. The method includes binning the first, second, and third borehole system data to generate first binned borehole system data, second binned borehole system data, and third binned borehole system data, respectively. The method also includes generating a display of relationships among all of the first, second, and third binned borehole system data and the fourth borehole system data. The method further includes adjusting an operational parameter of a downhole assembly comprising the drill bit to control operation of the downhole assembly based on an analysis of the display of relationships among each of the first, second, and third binned borehole system data and the fourth borehole system data; performing at least one of selecting a tool to operate in the first borehole system and creating a tool to operate in the first borehole
system based on the display of relationships among all of the first, second, and third binned borehole system data and the fourth borehole system data; determining a rate of penetration of the drill bit based at least in part on the measurement of characteristics of the earth formation; and adjusting the weight-on-bit of the drill bit and adjusting the rotation rate to achieve the rate of penetration of the drill bit.

Embodiments of the invention relate to a borehole system including a downhole assembly including at least a portion located in a borehole. The system also includes a computer configured to visualize borehole system data, the computer including memory and a processor. The processor is configured to obtain first borehole system data, second borehole system data, third borehole system data, and fourth borehole system data corresponding to first, second, third, and fourth borehole system characteristics, respectively, of a first borehole system, wherein the first borehole system data represents a weight-on-bit of a drill bit of a downhole assembly, wherein the second borehole system data represents a rotation rate, wherein the third borehole system data represents a measurement of characteristics of an earth formation, and wherein the fourth borehole system data represents an effectiveness of operation of the downhole assembly. The processor is further configured to bin the first, second, and third borehole system data to generate first binned borehole system data, second binned borehole system data, and third binned borehole system data, respectively. The processor is
further configured to generate display data of relationships among each of the first, second, and third binned borehole system data and the fourth borehole system data. The processor is further configured to adjust an operational parameter of a downhole assembly comprising the drill bit to control operation of the downhole assembly based on an analysis of the display of relationships among each of the first, second, and third binned borehole system data and the fourth borehole system data, to perform at least one of selecting a tool to operate in the first borehole system and create a tool to operate in the first borehole system based on the display of relationships among all of the first, second, and third binned borehole system data and the fourth borehole system data, to determine a rate of penetration of the drill bit based at least in part on the measurement of characteristics of the earth formation, and to adjust the weight-on-bit of the drill bit and adjust the rotation rate to achieve the rate of penetration of the drill bit.

### BRIEF DESCRIPTION OF THE DRAWINGS

Referring now to the drawings wherein like elements are numbered alike in the several Figures:
FIG. 1 illustrates a borehole system according to an embodiment of the invention;
FIG. 2 is a flow diagram of a method of visualizing borehole system data according to an embodiment of the invention;
FIG. 3 is a graphic representation of first to fourth borehole system data according to an embodiment of the invention; and
FIG. 4 is a graphic representation of first to fifth borehole system data according to an embodiment of the invention.

### DETAILED DESCRIPTION

Conventional borehole system analyses display calculated or measured data in two or three dimensions. Embodiments of the invention relate to data visualization in borehole systems in four or more dimensions.

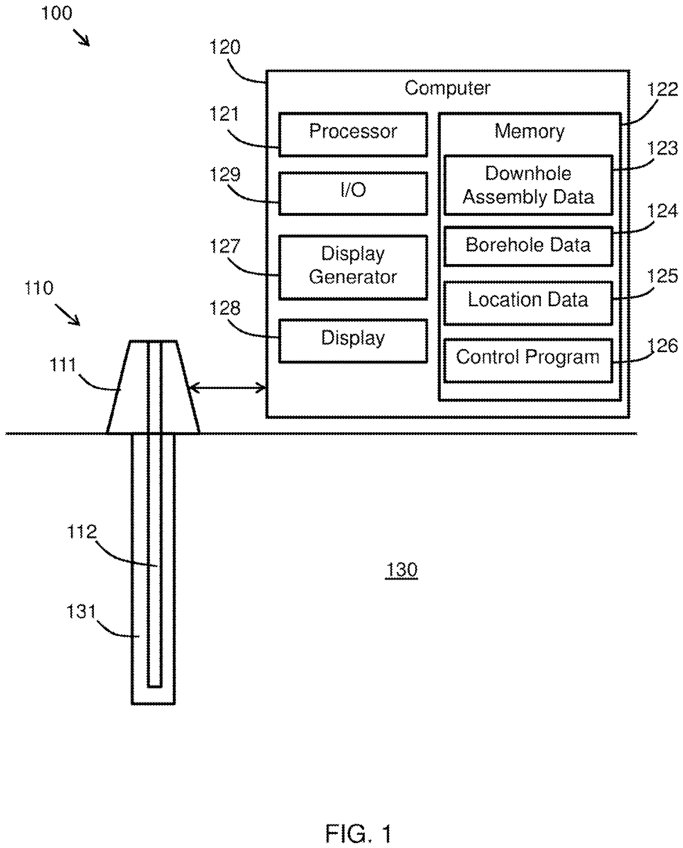

FIG. 1 illustrates a borehole system 100 according to an embodiment of the invention. The system 100 includes a downhole assembly 110 including a derrick 111 or other support structure and a downhole portion 112, such as a pipe, drill bit, or other completion located in a borehole 131 of an earth formation 130. The system 100 also includes a computer 120, which may be a borehole system analysis computer and may further be a downhole assembly control computer to control the downhole assembly 110, such as by adjusting a weight-on-bit of a drill bit, adjusting a rotation speed of a drill bit, adjusting fluid flow rates of borehole fluid, adjusting a composition of fluid flow rates, or adjusting any other downhole assembly control parameter.

The computer 120 includes a processor 121 and memory 122. The memory stores data and programs, including downhole assembly data 123, borehole data 124, location data 125, one or more control programs 126 and any other data or program. The computer 120 also includes a display generator 127, a display 128, and an input/output (I/O) module 129. The display generator 127 may include one or more processors and memory, and may comprise one or more computer programs to control the one or more processors, or the
processor 121 to generate display data, being a graphical representation to depict borehole system data. While FIG. 1 illustrates the computer 120 as a single computer, embodiments of the invention encompass one or more computers connected one or more wired or wireless connections to form a distributed computing system.

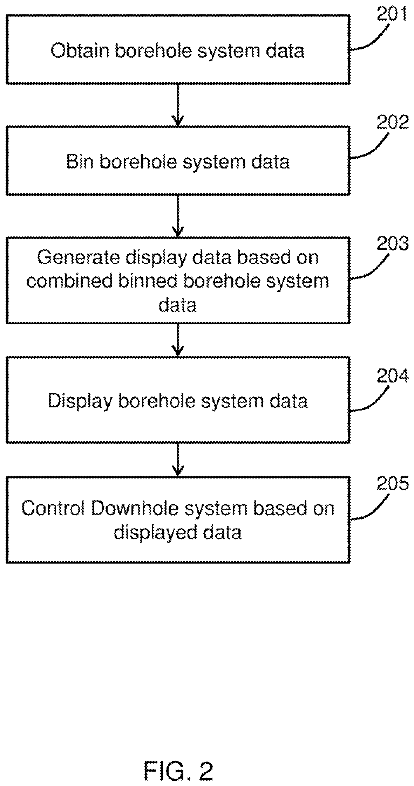

Operation of the borehole system 100 will be described with respect to the flow diagram of FIG. 2. In block 201, the computer 120 obtains borehole system data. In particular, the computer 120 obtains at least first to fourth borehole system data. The data may be obtained for one borehole, for one or more operations of one borehole, for multiple boreholes, or for multiple operations of multiple boreholes. The computer 120 may also obtain additional borehole system data, such as fifth or sixth borehole system data.

The borehole system data may include formation data regarding characteristics of the formation 130, borehole fluid data of fluids in the borehole 131, downhole assembly data of characteristics of the downhole assembly 110, or any other borehole system data. Examples of downhole assembly data include rate of penetration data corresponding to a rate at which a drill bit penetrates the formation 130, a weight-on-bit measurement, torque measurements, flow rate measurements, or any other downhole assembly data. Examples of downhole assembly data also include surface data that relates to the downhole assembly including, for example, weight-on-bit and torque.

The computer 120 may obtain the borehole system data via wires or wirelessly from the downhole assembly. In addition, the computer 120 stores the borehole system data in memory 122 and may use both the data received from the data lines from the downhole assembly 110 and historical data stored in memory 122 to generate a display with the display generator 127, to analyze the borehole system data, and to control the downhole assembly 110. In embodiments of the invention, the historical data may include data from multiple runs in one borehole, where a run is defined as a section of the borehole. In some embodiments, the historical data includes data from other boreholes than the borehole being drilled.

In block 202, the computer 120 bins the borehole system data, generating at least first to third binned borehole system data. The binning may be performed based on any criteria, such as data collected during a predetermined interval of time, at predetermined depths along the borehole 131, predetermined ranges of magnitudes or intensities of measurements, or any other criteria.

For example, in one embodiment, borehole system data is binned in increments of time, such as by measuring a peak, average, or median of measurements taken over a period of one second, one minute, one hour, or any other duration of time. In another embodiment, borehole system data is binned by increments of borehole depth, such as an absolute depth from the surface or a depth along a length of the borehole. In yet another embodiment, borehole system data is binned by a magnitude or intensity of a measurement. For example, a measurement of weight-on-bit may be binned in increments of five, ten, or twenty kiloNewtons or any other increment of weight-on-bit. In some embodiments, the fourth borehole system data is also binned to generate fourth binned borehole system data.

In one embodiment of the invention, the computer 120 performs a confidence check to remove data bins that do not contain sufficient data. For example, if a bin of data contains less than ten minutes of drilling time in a bin representing an hour or more, the bin may be omitted from a representation of the borehole system. The confidence check may be applied to discard outlier data.

In block 203, display data is generated including each of the first to third binned borehole system data and the fourth borehole system data. In one embodiment, the display data is generated including un-binned fourth borehole system data, and in an alternative embodiment, the display data is generated using binned fourth borehole system data. The display data represents a graphical representation of each of the first to third binned borehole system data and the fourth borehole system data displayed each with respect to each other. In one embodiment, the display data is generated by the display generator 127. In one embodiment, the display generator 127 analyzes the first to third binned borehole system data and the fourth borehole system data and converts the borehole system data that may be transmitted to a display device 128 to generate a graphical representation of the first to third binned borehole system data and the fourth borehole system data. In particular, the display generator 127 generates a graphical representation that incorporates all of the first to third binned borehole system data and the fourth borehole system data in the same graphical representation.

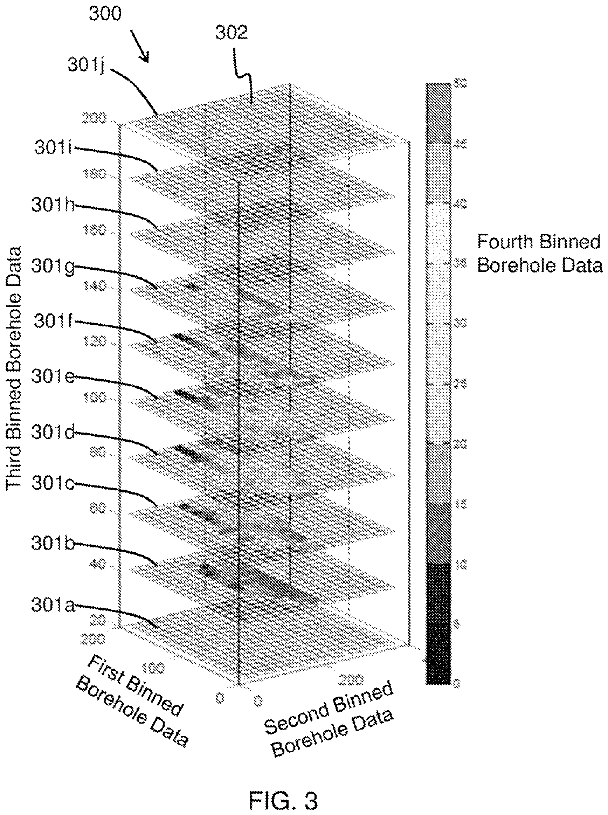

In block 204, the display data is displayed on a display device. FIG. 3 illustrates an example of a graphical representation 300 of all of the first to third binned borehole system data and the fourth borehole system data according to an embodiment of the invention. As illustrated in FIG. 3, the first binned borehole system data makes up a first axis of first to tenth graph layers 301a to 301j. The second binned borehole system data makes up a second axis of the first to tenth graph layers. Each of the first to tenth graph layers 301a to 301j corresponds to a predetermined interval of the third binned borehole system data. Different shadings, colorations, or patterns in the rectangles 302 that make up the first to tenth graph layers correspond to predetermined intervals of the fourth borehole system data, which may be un-binned borehole system data or binned borehole system data.

According to the invention, the first and second borehole system data correspond to downhole assembly operating characteristics, such as weight-on-bit, rotations-per-minute, flow rates, torque, etc. According to the invention, the third borehole system data is a measurement of characteristics of an earth formation, such as a gamma measurement. According to the invention, the fourth borehole system data is a parameter that measures an effectiveness of operation of the downhole assembly, such as the rate of penetration of a drill bit, a tool failure rate, a representation of non-productive time or vibration levels, representations of a combination of performance and reliability, financial effectiveness, etc.

In block 205, the downhole assembly is controlled based on the graphical representation. For example, in an embodiment in which the first and second borehole system data correspond to downhole assembly operating characteristics, the third borehole system data is a measurement of characteristics of an earth formation, and the fourth borehole system data is a parameter that measures an effectiveness of operation of the downhole assembly, the optimum level of operation of a downhole assembly may be determined by comparing a measured earth formation characteristic with an earth formation characteristic represented in the graphical representation 300. For example, if the third borehole system data represents a gamma measurement and the fourth borehole system data represents a rate of penetration of a drill bit, the first borehole system data represents a weight-on-bit, and the second borehole system data represents a rotation rate of the drill string, then an optimum rate of penetration may be determined at a given gamma level, and a weight-on-bit and rotation rate may be adjusted to achieve the optimum rate of penetration for a measured gamma level. The first to fourth borehole system data may be obtained from historical data of previous runs or other boreholes, or the data may be obtained in real-time from a borehole being analyzed and controlled. The optimum rate of penetration data obtained from the analysis may be provided to an operator or set points for controlling a drilling operation may be provided directly to a controller (i.e. a computer including processor that generates control signals) of a drilling rig.

In one embodiment, the downhole assembly 110 is controlled using the control program 126 executed by the processor 121, or by one or more control modules including separate processors, memory, and supporting circuitry. In one embodiment, the downhole assembly is controlled based on a user analyzing the displayed borehole system data and interacting with a control computer to control a downhole assembly. In another embodiment, the downhole assembly 110 is controlled by a computer program that analyzes one of the display data and displayed graphical representation of the display data to determine optimal operating parameters.

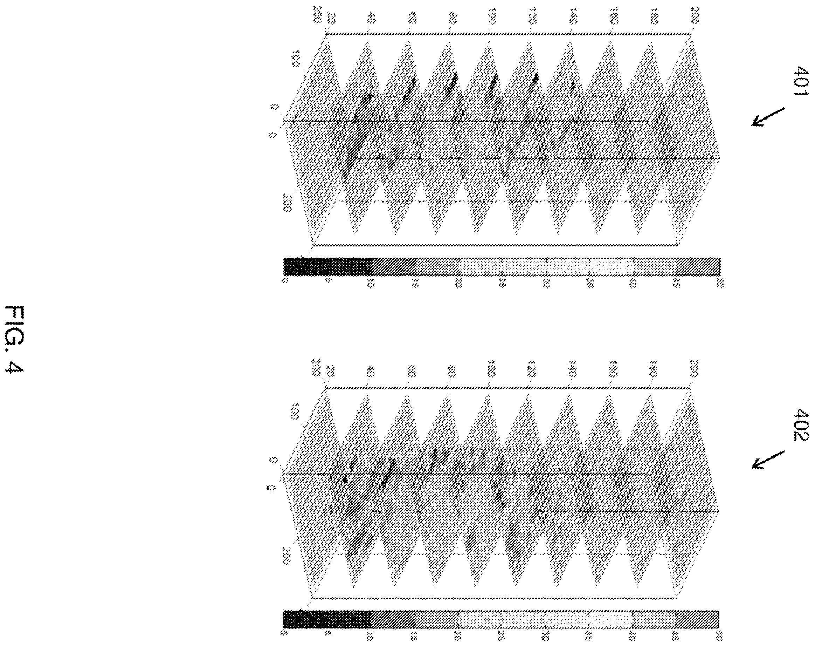

FIG. 4 illustrates a graphical representation generated according to another embodiment of the invention. As illustrated in FIG. 4, the graphical representation 400 may include a first graphical representation 401 illustrating the relationship among first to third binned borehole system data and the fourth borehole system data corresponding to a first borehole and a second graphical representation 402 illustrating the relationship among the first to third binned borehole system data and the fourth borehole system data corresponding to a second borehole. Information about the locations of the first borehole and the second borehole may be stored in memory 122 as location data 125.

Embodiments of the invention encompass a comparison of multiple boreholes and borehole systems, as discussed above, as well as different runs within the same borehole. For example, in one embodiment, a first graphical representation 401 would correspond to a first run within a borehole and the second graphical representation 402 would correspond to a second run within the same borehole. Embodiments of the invention are not limited to the above examples, but include comparison of borehole data corresponding to different geographies, operations performed at different times, and operations performed with different parameters, such as different drilling tools or other instruments or different drilling methods. In addition, embodiments of the invention are not limited to drilling, but encompass any downhole operations including analysis of predicted boreholes, actual boreholes, borehole drilling, completion operations, and any other operations related to the borehole.

In an embodiment in which the graphical representation includes multiple graphical representations 401 and 402, one or more downhole assemblies may be controlled or selected for operation based on analyzing the first and second graphical representations 401 and 402. In an embodiment in which the graphical representation includes multiple graphical representations 401 and 402, the graphical representation may display five dimensions corresponding to five borehole system characteristics.

In embodiments of the invention, since the third borehole system data is binned, forming multiple separate graph layers, a user or operator may analyze the characteristics of each separate graph layer to identify optimum operating parameters of a downhole assembly. In another embodiment, a computer analyzes the first to third binned borehole system data and the fourth borehole system data and generates an alert or automatically adjusts borehole system operating characteristics based on the analysis without operator input.

Embodiments of the invention relate to representing borehole system data in four or more dimensions to determine optimal operating conditions of the borehole system. In some embodiments, optimal conditions are obtained by representing borehole data in five dimensions, including multiple four-dimensional graphs, to permit an operator or computer to compare the multiple four-dimensional graphs. The operator or computer may then perform any desired operation based on the representation, including controlling operating conditions of the borehole system, such as weight-on-bit, drilling speed, etc. The operator or computer may also select equipment for operating the borehole system based on the representation, may select locations for performing downhole operations based on the representation, may analyze a financial feasibility or profitability of a downhole system based on the representation, or may perform any other operation related to the downhole system. In some embodiments, the representation of the borehole system data in four or more dimensions is used to generate a model of the borehole system or of other borehole systems.

In some embodiments of the invention, data is collect over time, such as via multiple runs in a borehole, the data is visualized in four or more dimensions, and optimal operating conditions are determined based on the visualization. The optimal operating conditions may relate to a financial cost to drill or perform another downhole operation, such as a completion operation. The optimal operating conditions may further relate to a time needed to perform a downhole operation, equipment needed to perform a downhole operation, an optimal or required geography of the borehole (such as curvature, size, etc.), or any other operating conditions, maintaining a failure rate of equipment or the borehole below predetermined levels, minimizing non-productive time of the borehole system, minimizing tool maintenance, maintaining a high rate of penetration, or any other optimal operating condition.

In some embodiments, two or more borehole systems, such as two or more bottom hole assemblies, are compared by comparing two or more representations of at least four-dimensional borehole system data to determine which is operating better.

While one or more embodiments have been shown and described, modifications and substitutions may be made thereto without departing from the scope of the invention, which is defined by the appended claims. Accordingly, it is to be understood that the present invention has been described by way of illustrations and not limitation.

## Claims

1. A method of visualizing borehole system data, comprising:
obtaining first borehole system data, second borehole system data, third borehole system data, and fourth borehole system data corresponding to first, second, third, and fourth borehole system characteristics, respectively, of a first borehole system (100), wherein the first borehole system data represents a weight-on-bit of a drill bit of a downhole assembly (110), wherein the second borehole system data represents a rotation rate, wherein the third borehole system data represents a measurement of characteristics of an earth formation (130), and wherein the fourth borehole system data represents an effectiveness of operation of the downhole assembly (110);
binning the first, second, and third borehole system data to generate first binned borehole system data, second binned borehole system data, and third binned borehole system data, respectively;
generating a display of relationships among all of the first, second, and third binned borehole system data and the fourth borehole system data;
adjusting an operational parameter of the downhole assembly (110) comprising the drill bit to control operation of the downhole assembly (110) based on an analysis of the display of relationships among each of the first, second, and third binned borehole system data and the fourth borehole system data;
performing at least one of selecting a tool to operate in the first borehole system (100) and creating a tool to operate in the first borehole system (100) based on the display of relationships among all of the first, second, and third binned borehole system data and the fourth borehole system data;
determining a rate of penetration of the drill bit based at least in part on the measurement of characteristics of the earth formation (130); and
adjusting the weight-on-bit of the drill bit and adjusting the rotation rate to achieve the rate of penetration of the drill bit.

2. The method of claim 1, wherein generating the display of relationships among all of the first, second, and third binned borehole system data and the fourth borehole data comprises:
generating a first graph layer of a relationship between the first binned borehole system data and the second binned borehole system data at a first level of the third binned borehole system data;
generating a second graph layer of a relationship between the first binned borehole system data and the second binned borehole system data at a second level of the third binned borehole system data; and
displaying a relationship between the fourth borehole system data relative to the first binned borehole system data, the second binned borehole system data, and the third binned borehole system data on each of the first and second graph layers.

3. The method of claim 2, wherein the first graph layer and the second graph layer each comprise a plane defined by a first coordinate axis and a second coordinate axis.

4. The method of claim 1, wherein generating the display of the first, second, and third binned borehole system data and the fourth borehole system data includes simultaneously generating a first display corresponding to a first borehole (131) of the first borehole system (100) and a second display corresponding to a second borehole of a second borehole system.

5. The method of claim 1, wherein generating the display of the first, second, and third binned borehole system data and the fourth borehole system data includes simultaneously generating a first display corresponding to a first run within a borehole and a second run within the borehole (131).

6. The method of claim 1, wherein at least one of the first and second borehole system data corresponds to an adjustable operating parameter of a downhole assembly (110).

7. The method of claim 1, wherein the measurement of drilling effectiveness of the downhole assembly (110) corresponds to a financial cost of drilling.

8. The method of claim 1, wherein at least one of the first, second, third, and fourth borehole system data is historical data obtained from a previous operation in the first borehole system (100) or from a second borehole system.

9. A borehole system (100), comprising:
a downhole assembly (110) including at least a portion located in a borehole (131); and
a computer (120) configured to visualize borehole system data, the computer (120) including memory (122) and a processor (121), the processor (121) configured to obtain first borehole system data, second borehole system data, third borehole system data, and fourth borehole system data corresponding to first, second, third, and fourth borehole system characteristics, respectively, of a first borehole system (100), wherein the first borehole system data represents a weight-on-bit of a drill bit of a downhole assembly (110), wherein the second borehole system data represents a rotation rate, wherein the third borehole system data represents a measurement of characteristics of an earth formation (130), and wherein the fourth borehole system data represents an effectiveness of operation of the downhole assembly (110),
bin the first, second, and third borehole system data to generate first binned borehole system data, second binned borehole system data, and third binned borehole system data, respectively,
generate display data of relationships among all of the first, second, and third binned borehole system data and the fourth borehole system data relative to each other,
adjust an operational parameter of the downhole assembly (110) comprising the drill bit to control operation of the downhole assembly (110) based on an analysis of the display of relationships among each of the first, second, and third binned borehole system data and the fourth borehole system data,
perform at least one of selecting a tool to operate in the first borehole system (100) and create a tool to operate in the first borehole system (100) based on the display of relationships among all of the first, second, and third binned borehole system data and the fourth borehole system data,
determine a rate of penetration of the drill bit based at least in part on the measurement of characteristics of the earth formation (130), and
adjust the weight-on-bit of the drill bit and adjust the rotation rate to achieve the rate of penetration of the drill bit.

10. The borehole system (100) of claim 9, wherein at least one of the first borehole system data, second borehole system data, third borehole system data, and fourth borehole system data is obtained from a sensor in the portion of the downhole assembly (110) located in the borehole (131).

11. The borehole system of claim 9, wherein at least one of the first borehole system data, second borehole system data, third borehole system data, and fourth borehole system data is obtained from measuring an operational characteristic of the downhole assembly (110).

12. The borehole system of claim 9, wherein the computer (120) is configured to generate the display data such that the first binned borehole system data and second binned borehole system data form a first graph layer corresponding to a first level of the third binned borehole system data, and the first binned borehole system data and second binned borehole system data form a second graph layer corresponding to a second level of the third binned borehole system data.

13. The borehole system of claim 12, wherein the computer (120) is configured to generate the display data such that the fourth borehole system data is displayed relative to the first, second, and third binned borehole system data in the first and second graph layers.

14. The borehole system of claim 13, wherein the computer (120) is configured to generate the display data including a first graph of relationships among each of the first, second, and third binned borehole system data and the fourth borehole system data at a first geographic location and a second graph of relationships among each of the first, second, and third binned borehole system data and the fourth borehole system data at a second geographic location.

15. The borehole system of claim 9, wherein at least one of the first and second borehole system data corresponds to an adjustable operating parameter of a downhole assembly (110).

## Patentansprüche

1. Verfahren zur Visualisierung von Bohrlochsystemdaten, das Folgendes umfasst:
Erhalten von ersten Bohrlochsystemdaten, zweiten Bohrlochsystemdaten, dritten Bohrlochsystemdaten und vierten Bohrlochsystemdaten, die jeweils ersten, zweiten, dritten und vierten Bohrlochsystemmerkmalen eines ersten Bohrlochsystems (100) entsprechen, wobei die ersten Bohrlochsystemdaten eine Meißelbelastung eines Bohrmeißels einer Bohrlochanordnung (110) darstellen, wobei die zweiten Bohrlochsystemdaten eine Rotationsrate darstellen, wobei die dritten Bohrlochsystemdaten eine Messung von Merkmalen einer Erdformation (130) darstellen und wobei die vierten Bohrlochsystemdaten eine Effektivität des Betriebs der Bohrlochanordnung (110) darstellen;
Gruppieren der ersten, zweiten und dritten Bohrlochsystemdaten, um jeweils erste gruppierte Bohrlochsystemdaten, zweite gruppierte Bohrlochsystemdaten und dritte gruppierte Bohrlochsystemdaten zu erzeugen;
Erzeugen einer Anzeige von Verhältnissen zwischen allen von den ersten, zweiten und dritten gruppierten Bohrlochsystemdaten und den vierten Bohrlochsystemdaten;
Anpassen eines Betriebsparameters der Bohrlochanordnung (110), das umfasst, dass der Bohrmeißel einen Betrieb der Bohrlochanordnung (110) basierend auf einer Analyse der Anzeige von Verhältnissen zwischen jedem von den ersten, zweiten und dritten gruppierten Bohrlochsystemdaten und den vierten Bohrlochsystemdaten steuert;
Durchführen von wenigstens einem von Auswählen eines Werkzeugs zum Betreiben in dem ersten Bohrlochsystem (100) und Erzeugen eines Werkezeugs zum Betreiben in dem ersten Bohrlochsystem (100) basierend auf der Anzeige von Verhältnissen zwischen allen von den ersten, zweiten und dritten gruppierten Bohrlochsystemdaten und den vierten Bohrlochsystemdaten;
Bestimmen einer Penetrierungsrate des Bohrmeißels wenigstens teilweise basierend auf der Messung von Merkmalen der Erdformation (130); und
Anpassen der Meißelbelastung des Bohrmeißels und Anpassen der Rotationsrate, um die Penetrierungsrate des Bohrmeißels zu erreichen.

2. Verfahren nach Anspruch 1, wobei das Erzeugen der Anzeige von Verhältnissen zwischen allen von den ersten, zweiten und dritten gruppierten Bohrlochsystemdaten und den vierten Bohrlochdaten Folgendes umfasst:
Erzeugen einer ersten Graphschicht eines Verhältnisses zwischen den ersten gruppierten Bohrlochsystemdaten und den zweiten gruppierten Bohrlochsystemdaten bei einem ersten Niveau der dritten gruppierten Bohrlochsystemdaten;
Erzeugen einer zweiten Graphschicht eines Verhältnisses zwischen den ersten gruppierten Bohrlochsystemdaten und den zweiten gruppierten Bohrlochsystemdaten auf einem zweiten Niveau der dritten gruppierten Bohrlochsystemdaten; und
Anzeigen eines Verhältnisses zwischen den vierten Bohrlochsystemdaten relativ zu den ersten gruppierten Bohrlochsystemdaten, den zweiten gruppierten Bohrlochsystemdaten und den dritten gruppierten Bohrlochsystemdaten auf jeder von der ersten und zweiten Graphschicht.

3. Verfahren nach Anspruch 2, wobei die erste Graphschicht und die zweite Graphschicht je eine Ebene umfassen, die von einer ersten Koordinatenachse und einer zweiten Koordinatenachse definiert wird.

4. Verfahren nach Anspruch 1, wobei das Erzeugen der Anzeige der ersten, zweiten und dritten gruppierten Bohrlochsystemdaten und der vierten Bohrlochsystemdaten Folgendes einschließt:
simultanes Erzeugen einer ersten Anzeige, die einem ersten Bohrloch (131) des ersten Bohrlochsystems (100) entspricht,
und einer zweiten Anzeige, die einem zweiten Bohrloch eines zweiten Bohrlochsystems entspricht.

5. Verfahren nach Anspruch 1, wobei das Erzeugen der Anzeige der ersten, zweiten und dritten gruppierten Bohrlochsystemdaten und der vierten Bohrlochsystemdaten Folgendes einschließt: simultanes Erzeugen einer ersten Anzeige, die einem ersten Lauf innerhalb eines Bohrlochs und einem zweiten Lauf innerhalb des Bohrlochs (131) entspricht.

6. Verfahren nach Anspruch 1, wobei wenigstens eines von den ersten und den zweiten Bohrlochsystemdaten einem anpassbaren Betriebsparameter einer Bohrlochanordnung (110) entspricht.

7. Verfahren nach Anspruch 1, wobei die Messung der Bohreffektivität der Bohrlochanordnung (110) finanziellen Kosten des Bohrens entspricht.

8. Verfahren nach Anspruch 1, wobei wenigstens eines von den ersten, zweiten, dritten und vierten Bohrlochsystemdaten historische Daten sind, die bei einem vorhergehenden Betrieb in dem ersten Bohrlochsystem (100) oder von einem zweiten Bohrlochsystem erhalten wurden.

9. Bohrlochsystem (100), das Folgendes umfasst:
eine Bohrlochanordnung (110), die wenigstens einen Abschnitt einschließt, der in einem Bohrloch (131) positioniert ist; und
einen Computer (120), der konfiguriert ist, um Bohrlochsystemdaten zu visualisieren, wobei der Computer (120) einen Speicher (122) und einen Prozessor (121) einschließt, wobei der Prozessor (121) konfiguriert ist, um erste Bohrlochsystemdaten, zweite Bohrlochsystemdaten, dritte Bohrlochsystemdaten und vierte Bohrlochsystemdaten zu erhalten, die jeweils ersten, zweiten, dritten und vierten Bohrlochsystemmerkmalen eines ersten Bohrlochsystems (100) entsprechen, wobei die ersten Bohrlochsystemdaten eine Meißelbelastung eines Bohrmeißels einer Bohrlochanordnung (110) darstellen, wobei die zweiten Bohrlochsystemdaten eine Rotationsrate darstellen, wobei die dritten Bohrlochsystemdaten eine Messung von Merkmalen einer Erdformation (130) darstellen und wobei die vierten Bohrlochsystemdaten eine Effektivität des Betriebs der Bohrlochanordnung (110) darstellen,
Gruppieren der ersten, zweiten und dritten Bohrlochsystemdaten, um jeweils erste gruppierte Bohrlochsystemdaten, zweite gruppierte Bohrlochsystemdaten und dritte gruppierte Bohrlochsystemdaten zu erzeugen;
Erzeugen von Anzeigedaten von Verhältnissen zwischen allen von den ersten, zweiten und dritten gruppierten Bohrlochsystemdaten und den vierten Bohrlochsystemdaten relativ zueinander,
Anpassen eines Betriebsparameters der Bohrlochanordnung (110), das umfasst, dass der Bohrmeißel einen Betrieb der Bohrlochanordnung (110) basierend auf einer Analyse der Anzeige von Verhältnissen zwischen jedem von den ersten, zweiten und dritten gruppierten Bohrlochsystemdaten und den vierten Bohrlochsystemdaten steuert,
Durchführen von wenigstens einem von Auswählen eines Werkzeugs zum Betrieb in dem ersten Bohrlochsystem (100), und Erzeugen eines Werkzeugs zum Betrieb in dem ersten Bohrlochsystem (100) basierend auf der Anzeige von Verhältnissen zwischen allen von den ersten, zweiten und dritten gruppierten Bohrlochsystemdaten und den vierten Bohrlochsystemdaten,
Bestimmen einer Penetrierungsrate des Bohrmeißels wenigstens teilweise basierend auf der Messung von Merkmalen der Erdformation (130), und
Anpassen der Meißelbelastung des Bohrmeißels und Anpassen der Rotationsrate, um die Penetrierungsrate des Bohrmeißels zu erreichen.

10. Bohrlochsystem (100) nach Anspruch 9, wobei wenigstens eines von den ersten Bohrlochsystemdaten, den zweiten Bohrlochsystemdaten, den dritten Bohrlochsystemdaten und den vierten Bohrlochsystemdaten von einem Sensor in dem Abschnitt der Bohrlochanordnung (110) erhalten wird, der in dem Bohrloch (131) positioniert ist.

11. Bohrlochsystem nach Anspruch 9, wobei wenigstens eines von den ersten Bohrlochsystemdaten, den zweiten Bohrlochsystemdaten, den dritten Bohrlochsystemdaten und den vierten Bohrlochsystemdaten durch eine Messung eines Betriebsmerkmals der Bohrlochanordnung (110) erhalten wird.

12. Bohrlochsystem nach Anspruch 9, wobei der Computer (120) konfiguriert ist, um die Anzeigedaten derartig zu erzeugen, dass die ersten gruppierten Bohrlochsystemdaten und die zweiten gruppierten Bohrlochsystemdaten eine erste Graphschicht bilden, die einem ersten Niveau der dritten gruppierten Bohrlochsystemdaten entsprechen, und die ersten gruppierten Bohrlochsystemdaten und die zweiten gruppierten Bohrlochsystemdaten eine zweite Graphschicht bilden, die einem zweiten Niveau der dritten gruppierten Bohrlochsystemdaten entsprechen.

13. Bohrlochsystem nach Anspruch 12, wobei der Computer (120) konfiguriert ist, um die Anzeigedaten derartig zu erzeugen, dass die vierten Bohrlochsystemdaten relativ zu den ersten, zweiten und dritten gruppierten Bohrlochsystemdaten in der ersten und der zweiten Graphschicht angezeigt werden.

14. Bohrlochsystem nach Anspruch 13, wobei der Computer (120) konfiguriert ist, um die Anzeigedaten einschließlich eines ersten Graphen von Verhältnissen zwischen jedem von den ersten, zweiten und dritten gruppierten Bohrlochsystemdaten und den vierten Bohrlochsystemdaten an einer ersten geographischen Position und eines zweiten Graphen von Verhältnissen zwischen jedem von den ersten, zweiten und dritten gruppierten Bohrlochsystemdaten und den vierten Bohrlochsystemdaten an einer zweiten geographischen Position zu erzeugen.

15. Bohrlochsystem nach Anspruch 9, wobei wenigstens eines von den ersten und den zweiten Bohrlochsystemdaten einem anpassbaren Betriebsparameter einer Bohrlochanordnung (110) entspricht.

## Revendications

1. Procédé de visualisation de données de système de trou de forage, comprenant :
l'obtention de premières données de système de trou de forage, de deuxièmes données de systèmes de trou de forage, de troisièmes données de système de trou de forage, et de quatrièmes données de système de trou de forage correspondant à des première, deuxième, troisième, et quatrième caractéristiques de système de trou de forage, respectivement, d'un premier système de trou de forage (100), dans lequel les premières données de système de trou de forage représentent un poids sur trépan d'un trépan de forage d'un ensemble de fond de puits (110), dans lequel les deuxièmes données de système de trou de forage représentent une vitesse de rotation, dans lequel les troisièmes données de système de trou de forage représentent une mesure de caractéristiques d'une formation terrestre (130), et dans lequel les quatrièmes données de système de trou de forage représentent une efficacité de fonctionnement de l'ensemble de fond de puits (110) ;
le regroupement des premières, deuxièmes, et troisièmes données de système de trou de forage pour générer des premières données de système de trou de forage regroupées, des deuxièmes données de système de trou de forage regroupées, et des troisièmes données de système de trou de forage regroupées, respectivement ;
la génération d'un affichage des relations entre toutes les premières, deuxièmes, et troisièmes données de système de trou de forage regroupées et les quatrièmes données de système de trou de forage ;
l'ajustement d'un paramètre opérationnel de l'ensemble de fond de puits (110) comprenant le trépan de forage pour commander le fonctionnement de l'ensemble de fond de puits (110) sur la base d'une analyse de l'affichage des relations entre chacune des premières, deuxièmes, et troisièmes données de système de trou de forage regroupées et les quatrièmes données de système de trou de forage ;
la mise en oeuvre d'au moins l'une parmi la sélection d'un outil à faire fonctionner dans le premier système de trou de forage (100) et la création d'un outil à faire fonctionner dans le premier système de trou de forage (100) sur la base de l'affichage des relations entre toutes les premières, deuxièmes, et troisièmes données de système de trou de forage regroupées et les quatrièmes données de système de trou de forage ;
la détermination d'un taux de pénétration du trépan de forage sur la base au moins en partie de la mesure des caractéristiques de la formation terrestre (130) ; et
l'ajustement du poids sur trépan du trépan de forage et l'ajustement de la vitesse de rotation pour atteindre le taux de pénétration du trépan de forage.

2. Procédé selon la revendication 1, dans lequel la génération de l'affichage des relations entre toutes les premières, deuxièmes, et troisièmes données de système de trou de forage regroupées et les quatrièmes données de système de trou de forage comprend :
la génération d'une première couche graphique d'une relation entre les premières données de système de trou de forage regroupées et les deuxièmes données de système de trou de forage regroupées à un premier niveau des troisièmes données de système de trou de forage regroupées ;
la génération d'une seconde couche graphique d'une relation entre les premières données de système de trou de forage regroupées et les deuxièmes données de système de trou de forage regroupées à un second niveau des troisièmes données de système de trou de forage regroupées ; et
l'affichage d'une relation entre les quatrièmes données de système de trou de forage par rapport aux premières données de système de trou de forage regroupées, aux deuxièmes données de système de trou de forage regroupées, et aux troisièmes données de système de trou de forage regroupées sur chacune des première et seconde couches graphiques.

3. Procédé selon la revendication 2, dans lequel la première couche graphique et la seconde couche graphique comprennent chacune un plan défini par un premier axe de coordonnées et un second axe de coordonnées.

4. Procédé selon la revendication 1, dans lequel la génération de l'affichage des premières, deuxièmes, et troisièmes données de système de trou de forage regroupées et des quatrièmes données de système de trou de forage comprend
la génération simultanée d'un premier affichage correspondant à un premier trou de forage (131) du premier système de trou de forage (100) et d'un second affichage correspondant à un second trou de forage d'un second système de trou de forage.

5. Procédé selon la revendication 1, dans lequel la génération de l'affichage des premières, deuxièmes, et troisièmes données de système de trou de forage regroupées et des quatrièmes données de système de trou de forage comprend
la génération simultanée d'un premier affichage correspondant à un premier cycle de marche à l'intérieur d'un trou de forage et un second cycle de marche à l'intérieur du trou de forage (131).

6. Procédé selon la revendication 1, dans lequel au moins l'une parmi les premières et deuxièmes données de système de trou de forage correspond à un paramètre ajustable de fonctionnement d'un ensemble de fond de puits (110).

7. Procédé selon la revendication 1, dans lequel la mesure de l'efficacité de forage de l'ensemble de fond de puits (110) correspond à un coût financier de forage.

8. Procédé selon la revendication 1, dans lequel au moins l'une parmi les premières, deuxièmes, troisièmes, et quatrièmes données de système de trou de forage sont des données historiques obtenues à partir d'une opération antérieure dans le premier système de trou de forage (100) ou à partir d'un second système de trou de forage.

9. Système de trou de forage (100), comprenant :
un ensemble de fond de puits (110) comprenant au moins une partie située dans un trou de forage (131) ; et
un ordinateur (120) configuré pour visualiser des données de système de fond de puits, l'ordinateur (120) comprenant une mémoire (122) et un processeur (121), le processeur (121) étant configuré pour obtenir des premières données de système de trou de forage, des deuxièmes données de systèmes de trou de forage, des troisièmes données de système de trou de forage, et des quatrièmes données des systèmes de trou de forage correspondant à des première, deuxième, troisième, et quatrième caractéristiques de système de trou de forage, respectivement, d'un premier système de trou de forage (100), dans lequel les premières données de système de trou de forage représentent un poids sur trépan d'un trépan de forage d'un ensemble de fond de puits (110), dans lequel les deuxièmes données de système de trou de forage représentent une vitesse de rotation, dans lequel les troisièmes données de système de trou de forage représentent une mesure de caractéristiques d'une formation terrestre (130), et dans lequel les quatrièmes données de système de trou de forage représentent une efficacité de fonctionnement de l'ensemble de fond de puits (110),
regrouper les premières, deuxièmes, et troisièmes données de système de trou de forage pour générer des premières données de système de trou de forage regroupées, des deuxièmes données de système de trou de forage regroupées, et des troisièmes données de système de trou de forage regroupées, respectivement,
générer des données d'affichage de relations entre toutes les premières, deuxièmes, et troisièmes données de système de trou de forage regroupées et les quatrièmes données de système de trou de forage les unes par rapport aux autres,
ajuster un paramètre opérationnel de l'ensemble de fond de puits (110) comprenant le trépan de forage pour commander le fonctionnement de l'ensemble de fond de puits (110) sur la base d'une analyse de l'affichage des relations entre chacune des premières, deuxièmes, et troisièmes données de système de trou de forage regroupées et les quatrièmes données de système de trou de forage,
mettre en oeuvre au moins l'une parmi la sélection d'un outil à faire fonctionner dans le premier système de trou de forage (100) et la création d'un outil à faire fonctionner dans le premier système de trou de forage (100) sur la base de l'affichage des relations entre toutes les premières, deuxièmes, et troisièmes données de système de trou de forage regroupées et les quatrièmes données de système de trou de forage,
déterminer un taux de pénétration du trépan de forage sur la base au moins en partie de la mesure des caractéristiques de la formation terrestre (130), et
ajuster le poids sur trépan du trépan de forage et ajuster la vitesse de rotation pour atteindre le taux de pénétration du trépan de forage.

10. Système de trou de forage (100) selon la revendication 9, dans lequel au moins l'une parmi les premières données de système de trou de forage, les deuxièmes données de système de trou de forage, les troisièmes données de système de trou de forage, et les quatrièmes données de système de trou de forage est obtenue à partir d'un capteur dans la partie de l'ensemble de fond de puits (110) située dans le trou de forage (131).

11. Système de trou de forage selon la revendication 9, dans lequel au moins l'une parmi les premières données de système de trou de forage, les deuxièmes données de système de trou de forage, les troisièmes données de système de trou de forage, et les quatrièmes données de système de trou de forage est obtenue à partir de la mesure d'une caractéristique opérationnelle de l'ensemble de fond de puits (110).

12. Système de trou de forage selon la revendication 9, dans lequel l'ordinateur (120) est configuré pour générer les données d'affichage de sorte que les premières données de système de trou de forage regroupées et les deuxièmes données de système de trou de forage regroupées forment une première couche graphique correspondant à un premier niveau des troisièmes données de système de trou de forage regroupées, et les premières données de système de trou de forage regroupées et les deuxièmes données de système de trou de forage regroupées forment une seconde couche graphique correspondant à un second niveau des troisièmes données de système de trou de forage regroupées.

13. Système de trou de forage selon la revendication 12, dans lequel l'ordinateur (120) est configuré pour générer les données d'affichage de sorte que les quatrièmes données de système de trou de forage soient affichées par rapport aux premières, deuxièmes, et troisièmes données de système de trou de forage regroupées dans les première et seconde couches graphiques.

14. Système de trou de forage selon la revendication 13, dans lequel l'ordinateur (120) est configuré pour générer les données d'affichage incluant un premier graphique de relations entre chacune des premières, deuxièmes et troisièmes données de système de trou de forage regroupées et les quatrièmes données de système de trou de forage à un premier emplacement géographique et un second graphique de relations entre chacune des premières, deuxièmes et troisièmes données de système de trou de forage regroupées et les quatrièmes données de système de trou de forage à un second emplacement géographique.

15. Système de trou de forage selon la revendication 9, dans lequel au moins une parmi les premières et deuxièmes données de système de trou de forage correspond à un paramètre ajustable de fonctionnement d'un ensemble de fond de puits (110).
